# EUROPEAN PATENT APPLICATION

(11) **EP 3 879 870 A1**
(43) Date of publication of application: **15.09.2021**
(21) Application number: 19883736.1
(22) Date of filing: 18.06.2019
(51) Int. Cl.: H04W 16/28

(54) **CONTROL METHOD AND SYSTEM FOR ANTENNA ARRAY**

(30) Priority: 12.11.2018 CN 201811340442
(71) Applicant: ZTE Corporation, Shenzhen, Guangdong 518057 (CN)
(72) Inventor: CAO, Ninghao, Shenzhen, Guangdong 518057 (CN)
(74) Representative: Swindell & Pearson Limited
(86) International application number: PCT/CN2019/091704
(87) International publication number: WO 2020/098268

(57) **Abstract**

The present invention relates to a control method and system for an antenna array. The antenna array comprises a plurality of antennas. The control method comprises the following steps: acquiring a pilot frequency signal sent by a terminal device, received by some of the antennas in an antenna array; determining signal strength information of the pilot frequency signal; determining a control strategy for the antenna array according to the signal strength information; and controlling the antenna array using the control strategy. In the present invention, the signal strength information of the pilot frequency signal is determined by acquiring the pilot frequency signal sent by the terminal device, received by some of the antennas in the antenna array on a base station side, the control strategy for the antenna array is determined according to the signal strength information, and the antenna array is controlled using the control strategy. Compared with the increase in system overheads caused by receiving the pilot frequency signal sent by a user by means of a large-scale antenna array on the base station side and processing the pilot frequency signal in the prior art, the present invention can reduce the system overheads and improve the system operating efficiency.

## Description

### CROSS-REFERENCE TO RELATED APPLICATION

The present invention claims priority of Chinese patent application No. 201811340442.5, entitled "method and system for controlling an antenna array", filed November 12, 2018, the contents of which are incorporated herein by reference in its entirety.

### TECHNICAL FIELD

The present invention relates to the technical field of wireless communication, in particular to a method and a system for controlling an antenna array.

### BACKGROUND

Massive MIMO (Multiple-Input Multiple-Output) is adopted in 5G. In a Massive MIMO system, a large-scale antenna array is equipped at a base station side, and multiple antennas are used to form spatial freedom and effective multipath components, improving the spectrum utilization rate of the system.

Based on good directivity of antennas, an array of antennas (for example, 256, 128 and 64 antennas) are usually used to send signals to a client. At a user side, a large-scale antenna array in the same direction can greatly improve the network capacity and reduce spatial fading. Signal superposition gain formed by beamforming enables each antenna to transmit signals only with low power, so that the use of an expensive amplifier with large dynamic range power is avoided, and hardware costs are reduced. Time delay is reduced, and low-latency communication is realized. When acquiring uplink information, there is a need to send a pilot signal to a base station through a mobile phone terminal at the user side.

However, at the base station side, the pilot signal sent by a user are received and processed through the large-scale antenna array, resulting in an increased system burden and thus an increased system overhead.

### SUMMARY

In order to solve the above technical problem or at least partially solve the above technical problem, the present invention provides a method and a system for controlling an antenna array.

In a first aspect, the present invention provides a method for controlling an antenna array including a plurality of antennas, including:
acquiring a pilot signal sent by a terminal device and received by a part of the antennas in the antenna array;
determining signal strength information of the pilot signal;
determining a control strategy for the antenna array according to the signal strength information; and
controlling the antenna array using the control strategy

In a second aspect, the present invention provides a system for controlling an antenna array comprising a plurality of antennas, comprising:
a signal acquisition unit configured to acquire a pilot signal sent by a terminal device and received by a part of the antennas in the antenna array;
a signal strength determination unit configured to determine signal strength information of the pilot signal acquired by the signal acquisition unit;
a control strategy determination unit configured to determine a control strategy for the antenna array according to the signal strength information determined by the signal strength determination unit; and
a control unit configured to control the antenna array using the control strategy determined by the control strategy determination unit.

Compared with the existing technology, the technical scheme according to embodiments of the present invention has the following advantages. The method according to embodiments of the present invention includes: acquiring a pilot signal sent by a terminal device and received by a part of the antennas in an antenna array at a base station side, determining signal strength information of the pilot signal, determining a control strategy for the antenna array according to the signal strength information, and controlling the antenna array using the control strategy. Compared with the method of receiving a pilot signal sent by a user through a large-scale antenna array at the base station side and processing the pilot signal in the existing technology, the method of the present invention has the advantages of reduced system overhead and improved system operating efficiency.

### BRIEF DESCRIPTION OF DRAWINGS

The accompanying drawings herein are incorporated in and form part of the specification, illustrate embodiments consistent with the invention, and together with the specification serve to explain the principles of the invention.

In order to more clearly explain the embodiments of the present invention or the technical themes in the existing technology, the following briefly describes the accompanying drawings required for use in the description of the embodiments or the existing technology, and it will be apparent to those having ordinary skill in the art that other drawings may be obtained from these drawings without creative effort.
Fig. 1 is a flowchart of a method for controlling an antenna array according to an embodiment of the present invention;
Fig. 2 is a flowchart of a method shown in step S102 according to an embodiment of the present invention;
Fig. 3 is a flowchart of a method shown in step S1025 according to an embodiment of the present invention;
Fig. 4 is a flowchart of a method shown in step S1027 according to an embodiment of the present invention; and
Fig. 5 is a structural schematic diagram of a system for controlling an antenna array according to an embodiment of the present invention.

### DETAILED DESCRIPTION

In order to make the objectives, technical themes and advantages of the embodiments of the present invention more clear, the technical themes of the embodiments of the present invention will be described clearly and completely below with reference to the accompanying drawings in the embodiments of the present invention. All other embodiments obtained by those having ordinary skill in the art without creative effort, based on the embodiments of the invention, fall within the scope of the invention.

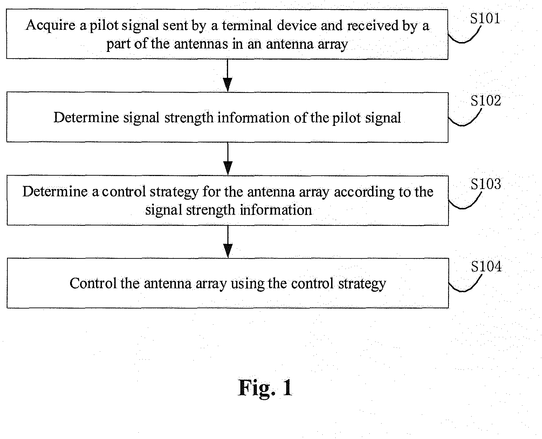

An embodiment of the present invention provides a method for controlling an antenna array, as shown in Fig. 1, including following steps S101 to S104.

At step S101, a pilot signal sent by a terminal device and received by a part of the antennas in the antenna array are acquired.

At step S102, signal strength information of the pilot signal is determined.

At step S103, a control strategy for the antenna array is determined according to the signal strength information.

At step S104, the antenna array is controlled using the control strategy.

In an embodiment of the present invention, taking an antenna array with 64 antennas as an example, since a 5G antenna array has a relatively good directivity, 12 antennas are selected for receiving the pilot signal, which is just an example, and the method is not limited to the antenna array with 64 antennas, but also applicable to antenna arrays with different numbers of antennas, such as 128 and 256.

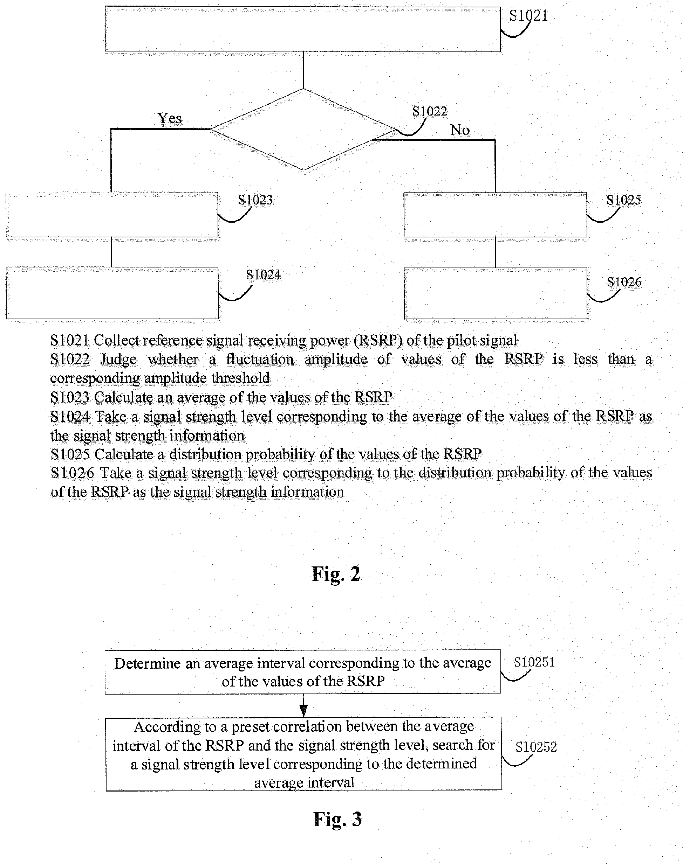

In an embodiment of the present invention, as shown in Fig. 2, step S102 includes following steps S1021 to S1026.

At step S1021, reference signal receiving power (RSRP) of the pilot signal is collected.

At step S1022, it is judged whether a fluctuation amplitude of values of the RSRP is less than a corresponding amplitude threshold. When the fluctuation amplitude of the values of the RSRP is less than the corresponding amplitude threshold, proceed to step S1023. When the fluctuation amplitude of the values of the RSRP is greater than or equal to the corresponding amplitude threshold, the RSRP are controlled frequently in order to maintain a certain signal-to-noise ratio at a receiving end, then proceed to step S1025.

At step S1023, an average of the values of the RSRP is calculated.

Optionally, when calculating the average of the values of the RSRP, a highest value and a lowest value are removed to make the calculation result of the average more accurate. For example, 12 antennas in the antenna array are selected for receiving the pilot signal, a highest value and a lowest value are removed from the values of the collected RSRP of the 12 antennas, and an average of the remaining 10 values is calculated.

At step S1024, a signal strength level corresponding to the average of the values of the RSRP is taken as the signal strength information

At step S1025, a distribution probability of the values of the RSRP is calculated.

At step S1026, a signal strength level corresponding to the distribution probability of the values of the RSRP is taken as the signal strength information.

In an embodiment of the present invention, as shown in Fig. 3, step S1025 includes following steps S10251 and S10252.

At step S10251, an average interval corresponding to the average of the values of the RSRP is determined.

At step S10252, according to a preset correlation between the average interval of the RSRP and the signal strength level, a signal strength level corresponding to the determined average interval is searched for.

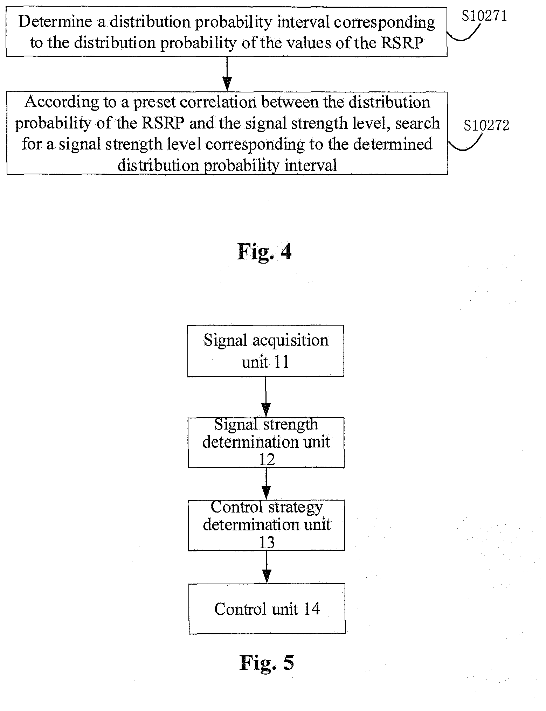

In an embodiment of the present invention, as shown in Fig. 4, step S1027 includes following steps S10271 and S10272.

At step S10271, a distribution probability interval corresponding to the distribution probability of the values of the RSRP is determined.

At step S10272, according to a preset correlation between the distribution probability of the RSRP and the signal strength level, a signal strength level corresponding to the determined distribution probability interval is searched for.

In an embodiment of the present invention, step S103 includes following steps:
- taking an operation of switching the antenna array from a current cell to a target handover cell as the control strategy for the antenna array when the signal strength level reaches a first preset level and the target handover cell is determined, to ensure that the user can obtain better signals; and
- taking an operation of switching a beam direction of the antenna array from a current direction to a target switching direction as the control strategy for the antenna array when the signal strength level reaches a second preset level and the target switching direction is determined.

An embodiment of the present invention provides a system for controlling an antenna array, as shown in Fig. 1, including:
a signal acquisition unit 11 configured to acquire a pilot signal sent by a terminal device and received by a part of the antennas in the antenna array;
a signal strength determination unit 12 configured to determine signal strength information of the pilot signal acquired by the signal acquisition unit 11;
a control strategy determination unit 13 configured to determine a control strategy for the antenna array according to the signal strength information determined by the signal strength determination unit 12; and
a control unit 14 configured to control the antenna array using the control strategy determined by the control strategy determination unit 13.

In an embodiment of the present invention, the signal strength determination unit 12 includes:
a first collection subunit configured to collect reference signal receiving power (RSRP) of the pilot signal;
a first judgment subunit configured to judge whether a fluctuation amplitude of values of the RSRP collected by the first collection subunit is less than a corresponding amplitude threshold;
a first calculation subunit configured to calculate an average of the values of the RSRP in response that a judgment result of the first judgment subunit indicates that the fluctuation amplitude of the values of the RSRP is less than the corresponding amplitude threshold; and
a first determination subunit configured to take a signal strength level corresponding to the average of the values of the RSRP calculated by the first calculation subunit as the signal strength information.

In an embodiment of the present invention, the signal strength determination unit 12 includes:
a second collection subunit configured to collect reference signal receiving power (RSRP) of the pilot signal;
a second judgment subunit configured to judge whether a fluctuation amplitude of values of the RSRP collected by the second collection subunit is greater than a corresponding amplitude threshold;
a second calculation subunit configured to calculate a distribution probability of the values of the RSRP in response that a judgment result of the second judgment subunit indicates that the fluctuation amplitude of the values of the RSRP is greater than or equal to the corresponding amplitude threshold; and
a second determination subunit configured to take a signal strength level corresponding to the distribution probability of the values of the RSRP calculated by the second calculation subunit as the signal strength information.

In an embodiment of the present invention, the control strategy determination unit 13 includes:
a first control strategy determination subunit configured to take an operation of switching the antenna array from a current cell to a target handover cell as the control strategy for the antenna array in response that the signal strength determination unit 12 determines that the signal strength level reaches a first preset level and determines the target handover cell; and
a second control strategy determination subunit configured to take an operation of switching a beam direction of the antenna array from a current direction to a target switching direction as the control strategy for the antenna array in response that the signal strength determination unit 12 determines that the signal strength level reaches a second preset level and determines the target switching direction.

It should be noted that, relational terms herein such as "first" and "second" are used only to distinguish one entity or operation from another, without necessarily requiring or implying any such actual relationship or order between those entities or operations. Moreover, terms "comprise", "include", or any other variant thereof are intended to cover non-exclusive inclusions such that a process, method, article or apparatus that includes a series of elements includes not only those elements, but also other elements not specifically listed, or elements inherent to such a process, method, article or apparatus. Without further limitations, the element defined by the statement "including a ..." does not rule out that there are further identical elements in the process, method, article, or apparatus including the element.

The above describes only some embodiments of the present invention, so that those having ordinary skill in the art can understand or implement the present invention. Various modifications to these embodiments will be apparent to those having ordinary in the art, and the general principles defined herein may be implemented in other embodiments without departing from the gist or scope of the invention. Accordingly, the present invention will not be limited to the embodiments shown herein, but will conform to the broadest scope consistent with the principles and novel features applied herein.

## Claims

1. A method for controlling an antenna array comprising a plurality of antennas, comprising:
acquiring a pilot signal sent by a terminal device and received by a part of the antennas in the antenna array;
determining signal strength information of the pilot signal;
determining a control strategy for the antenna array according to the signal strength information; and
controlling the antenna array using the control strategy.

2. The method for controlling an antenna array of claim 1, wherein the determining signal strength information of the pilot signal comprises:
collecting reference signal receiving power, abbreviated as RSRP, of the pilot signal;
judging whether a fluctuation amplitude of values of the RSRP is less than a corresponding amplitude threshold;
calculating an average of the values of the RSRP in response that the fluctuation amplitude of the values of the RSRP is less than the corresponding amplitude threshold; and
taking a signal strength level corresponding to the average of the values of the RSRP as the signal strength information.

3. The method for controlling an antenna array of claim 1, wherein the determining signal strength information of the pilot signal comprises:
collecting reference signal receiving power, abbreviated as RSRP, of the pilot signal;
judging whether a fluctuation amplitude of values of the RSRP is greater than a corresponding amplitude threshold;
calculating a distribution probability of the values of the RSRP in response that the fluctuation amplitude of the values of the RSRP is greater than or equal to the corresponding amplitude threshold; and
taking a signal strength level corresponding to the distribution probability of the values of the RSRP as the signal strength information.

4. The method for controlling an antenna array of claim 2, wherein the taking a signal strength level corresponding to the average of the values of the RSRP as the signal strength information comprises:
determining an average interval corresponding to the average of the values of the RSRP; and
searching for a signal strength level corresponding to the determined average interval according to a preset correlation between the average interval of the RSRP and the signal strength level.

5. The method for controlling an antenna array of claim 3, wherein the taking a signal strength level corresponding to the distribution probability of the values of the RSRP as the signal strength information comprises:
determining a distribution probability interval corresponding to the distribution probability of the values of the RSRP; and
searching for a signal strength level corresponding to the determined distribution probability interval according to a preset correlation between the distribution probability of the RSRP and the signal strength level.

6. The method for controlling an antenna array of any one of claims 1-5, wherein the determining a control strategy for the antenna array according to the signal strength information comprises:
taking an operation of switching the antenna array from a current cell to a target handover cell as the control strategy for the antenna array in response that the signal strength level reaches a first preset level and the target handover cell is determined; and
taking an operation of switching a beam direction of the antenna array from a current direction to a target switching direction as the control strategy for the antenna array in response that the signal strength level reaches a second preset level and the target switching direction is determined.

7. A system for controlling an antenna array comprising a plurality of antennas, comprising:
a signal acquisition unit configured to acquire a pilot signal sent by a terminal device and received by a part of the antennas in the antenna array;
a signal strength determination unit configured to determine signal strength information of the pilot signal acquired by the signal acquisition unit;
a control strategy determination unit configured to determine a control strategy for the antenna array according to the signal strength information determined by the signal strength determination unit; and
a control unit configured to control the antenna array using the control strategy determined by the control strategy determination unit.

8. The system for controlling an antenna array of claim 7, wherein the signal strength determination unit comprises:
a first collection subunit configured to collect reference signal receiving power, abbreviated as RSRP, of the pilot signal;
a first judgment subunit configured to judge whether a fluctuation amplitude of values of the RSRP collected by the first collection subunit is less than a corresponding amplitude threshold;
a first calculation subunit configured to calculate an average of the values of the RSRP in response that a judgment result of the first judgment subunit indicates that the fluctuation amplitude of the values of the RSRP is less than the corresponding amplitude threshold; and
a first determination subunit configured to take a signal strength level corresponding to the average of the values of the RSRP calculated by the first calculation subunit as the signal strength information.

9. The system for controlling an antenna array of claim 7, wherein the signal strength determination unit comprises:
a second collection subunit configured to collect reference signal receiving power, abbreviated as RSRP, of the pilot signal;
a second judgment subunit configured to judge whether a fluctuation amplitude of values of the RSRP collected by the second collection subunit is greater than a corresponding amplitude threshold;
a second calculation subunit configured to calculate a distribution probability of the values of the RSRP in response that a judgment result of the second judgment subunit indicates that the fluctuation amplitude of the values of the RSRP is greater than or equal to the corresponding amplitude threshold; and
a second determination subunit configured to take a signal strength level corresponding to the distribution probability of the values of the RSRP calculated by the second calculation subunit as the signal strength information.

10. The system for controlling an antenna array of any one of claims 7-9, wherein the control strategy determination unit comprises:
a first control strategy determination subunit configured to take an operation of switching the antenna array from a current cell to a target handover cell as the control strategy for the antenna array in response that the signal strength determination unit determines that the signal strength level reaches a first preset level and determines the target handover cell; and
a second control strategy determination subunit configured to take an operation of switching a beam direction of the antenna array from a current direction to a target switching direction as the control strategy for the antenna array in response that the signal strength determination unit determines that the signal strength level reaches a second preset level and determines the target switching direction.
